# EUROPEAN PATENT APPLICATION

(11) **EP 4 254 554 A1**
(43) Date of publication of application: **04.10.2023**
(21) Application number: 22760078.0
(22) Date of filing: 24.02.2022
(51) Int. Cl.: H01M 4/36, H01M 4/525, H01M 4/505, H01M 10/052, H01M 4/02

(54) **CATHODE ACTIVE MATERIAL, CATHODE COMPRISING SAME, AND SECONDARY BATTERY**

(30) Priority: 24.02.2021 KR 20210024668
(71) Applicant: LG Energy Solution, Ltd., Seoul 07335 (KR)
(72) Inventor: LEE, Dong Hun, Daejeon 34122 (KR); KIM, Hak Yoon, Daejeon 34122 (KR); BAEK, So Ra, Daejeon 34122 (KR); HUR, Hyuck, Daejeon 34122 (KR); KIM, Dong Hwi, Daejeon 34122 (KR); KIM, Hyeong Il, Daejeon 34122 (KR); CHAE, Seul Ki, Daejeon 34122 (KR); JUNG, Wang Mo, Daejeon 34122 (KR)
(74) Representative: Hoffmann Eitle
(86) International application number: PCT/KR2022/002707
(87) International publication number: WO 2022/182162

(57) **Abstract**

The present invention relates to a cathode active material and a preparation method therefor, wherein the average crystallite size of a core part is formed to be smaller than that of a shell part in a high-nickel cathode active material, and thus the cathode active material is developed to be able to suppress microcrack occurrence and electrolyte decomposition during charging and discharging.

## Description

### TECHNICAL FIELD

### Cross-reference to Related Applications

This application claims priority from Korean Patent Application No.10-2021-0024668, filed on February 24, 2021, the disclosure of which is incorporated by reference herein.

### Technical Field

The present invention relates to a core-shell structured positive electrode active material, and more particularly, to a positive electrode active material, in which life characteristics are improved while maintaining capacity characteristics by making an average crystallite size of a core portion of a positive electrode active material particle smaller than an average crystallite size of a shell portion, and a method of preparing the same.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

With the recent technological development of electric vehicles, demand for high-capacity secondary batteries is increasing, and, if a crystallite size of a primary particle is increased to increase capacity, since structural deformation of a crystal lattice occurs in an intercalation and deintercalation process of lithium ions during charge and discharge, micro cracks are likely to occur. Also, since an electrolyte solution penetrates into a positive electrode active material through the microcracks to degrade an active material structure and accelerate decomposition of the electrolyte solution by transition metals included in the positive electrode active material, life characteristics are rapidly degraded, and thus, a problem may occur in which output characteristics are degraded because resistance is increased due to the formation of a film caused by the decomposition of the electrolyte solution.

Thus, there is a need to develop a positive electrode active material having excellent life characteristics while being able to achieve high capacity.

### DISCLOSURE OF THE INVENTION

### TECHNICAL PROBLEM

An aspect of the present invention provides a positive electrode active material, which is developed to be able to suppress decomposition of an electrolyte solution and occurrence of microcracks of the positive electrode active material during charge and discharge by forming an average crystallite size of a core portion of the high-nickel positive electrode active material smaller than an average crystallite size of a shell portion, and a method of preparing the same.

### TECHNICAL SOLUTION

According to an aspect of the present invention, there is provided a positive electrode active material for a secondary battery which includes lithium transition metal oxide particles having a core-shell structure which includes a core portion and a shell portion disposed on a surface of the core portion, wherein an average crystallite size of the core portion is smaller than an average crystallite size of the shell portion, and an amount of nickel among total transition metals included in the core portion and the shell portion is 80 atm% or more.

According to another aspect of the present invention, there is provided a positive electrode including the positive electrode active material according to the present invention and a secondary battery including the positive electrode.

### ADVANTAGEOUS EFFECTS

Since a positive electrode active material according to the present invention has a structure in which an average crystallite size of a core portion is smaller than an average crystallite size of a shell portion, occurrence of defects, such as micro cracks, in the core portion and formation of a film due to decomposition of an electrolyte solution may be suppressed. In addition, the shell portion has an advantage of capacity characteristics by maintaining a larger average crystallite size than the core portion, and may reduce a reaction with the electrolyte solution by having a small specific surface area. Accordingly, the positive electrode active material according to the present invention has comparable capacity characteristics while having better life characteristics than a conventional positive electrode active material.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "core portion" is a region including a center of a positive electrode active material, wherein it means a region having a small average crystallite size of 100 nm to 180 nm.

In the present invention, the expression "shell portion" is a region including a surface of the positive electrode active material, wherein it means a region having an average crystallite size of 180 nm to 250 nm which is larger than that of the core portion.

In the present invention, the expression "crystalline" means a single crystal unit having a regular atomic arrangement. A size of the crystalline, for example, may be measured by magnifying a surface of a sample by 800,000 times to 2 million times using a TITAN G2 high-resolution transmission electron microscope (HR-TEM), and an average crystallite size may be measured by a method of obtaining an arithmetic average value of each of the measured crystallite sizes.

In the present invention, the expression "primary particle" denotes a smallest particle unit which is distinguished as one body when a cross section of a positive electrode active material precursor is observed through a scanning electron microscope (SEM), wherein it may be composed of a single crystalline, or may also be composed of a plurality of crystallines.

In the present invention, the expression "secondary particle" denotes a secondary structure formed by aggregation of a plurality of primary particles. An average particle diameter of the secondary particle may be measured using a particle size analyzer, and, in the present invention, Microtrac S3500 was used as the particle size analyzer.

The expression "particle diameter Dn" of the positive electrode active material in the present invention denotes a particle diameter at n% of cumulative distribution of volume according to the particle diameter. That is, D50 is a particle diameter at 50% of the cumulative distribution of volume according to the particle diameter, D90 is a particle diameter at 90% of the cumulative distribution of volume according to the particle diameter, and D10 is a particle diameter at 10% of the cumulative distribution of volume according to the particle diameter. The Dn may be measured by using a laser diffraction method. Specifically, after dispersing measurement target powder in a dispersion medium, the dispersion medium is introduced into a commercial laser diffraction particle size measurement instrument (e.g., Microtrac S3500) and a particle size distribution is calculated by measuring a difference in diffraction patterns due to a particle size when particles pass through a laser beam. The D10, D50, and D90 may be measured by calculating particle diameters at 10%, 50%, and 90% of the cumulative distribution of volume according to the particle diameter using the measurement instrument.

### Positive Electrode Active Material

A positive electrode active material of the present invention may include lithium transition metal oxide particles having a core-shell structure which includes a core portion and a shell portion disposed on a surface of the core portion.

An amount of nickel among total transition metals included in the core portion and the shell portion, which are included in the positive electrode active material of the present invention, may be 80 atm% or more. In a case in which the amount of the nickel is less than 80 atm%, since capacity of the positive electrode active material is reduced, there is a problem in that the positive electrode active material may not be used in an electrochemical device requiring high capacity.

Specifically, an average crystallite size of the core portion may be in a range of 100 nm to 180 nm, preferably 110 nm to 170 nm, and more preferably 120 nm to 160 nm. In a case in which the average crystallite size of the core portion of the positive electrode active material for a lithium secondary battery satisfies the above range, an effect of excellent life characteristics may be obtained while maintaining high capacity of the lithium secondary battery.

The core portion may have a composition represented by [Formula 1] below.

[Formula 1] Liₓ₁Niₐ₁CO_{b1}Mn_{c1}Al_{d1}M¹ₑ₁O₂

In Formula 1, M¹ may be at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and it is particularly preferable that M¹ includes Zr in terms of improving structural stability of lithium transition metal oxide.

x1 represents a molar ratio of lithium in the lithium transition metal oxide, wherein x1 may satisfy 0.90≤x1≤1.2, preferably 0.95≤x1≤1.08, and more preferably 1≤x1≤1.08.

a1 represents a molar ratio of nickel among metallic elements other than lithium in the lithium transition metal oxide, wherein a1 may satisfy 0.80≤a1≤0.95 or 0.83≤a1≤0.93. In a case in which the amount of the nickel satisfies the above range, high capacity characteristics may be achieved.

b1 represents a molar ratio of cobalt among the metallic elements other than lithium in the lithium transition metal oxide, wherein b1 may satisfy 0<b1<0.20, 0<b1≤0.15, or 0.01≤b1≤0.10. The amount of the cobalt may vary depending on amounts of nickel, manganese, aluminum, and M¹. In a case in which the amount of the cobalt is excessively large, there is a problem in that cost of the raw material increases overall and reversible capacity is decreased, and, in a case in which the amount of the cobalt is excessively small, there is a problem in that it is difficult to simultaneously achieve sufficient rate capability and high powder density of the battery.

c1 represents a molar ratio of manganese among the metallic elements other than lithium in the lithium transition metal oxide, wherein c1 may satisfy 0<c1<0.20, 0<c1≤0.15, or 0.01≤c1≤0.10. In a case in which the amount of the manganese is excessively large, problems may occur in achieving high capacity, and, in a case in which the amount of the manganese is excessively small, there is a problem in that production costs increase.

d1 represents a molar ratio of aluminum among the metallic elements other than lithium in the lithium transition metal oxide, wherein d1 may satisfy 0<d1<0.20,0<d1≤0.15, or 0.01≤d1≤0.10. In a case in which the amount of the aluminum is excessively large, there is a problem in that resistance is increased, and, in a case in which the amount of the aluminum is excessively small, there is a problem in that the production costs increase.

e1 represents a molar ratio of M¹ among the metallic elements other than lithium in the lithium transition metal oxide, wherein e1 may satisfy 0≤e1≤0.10 or 0≤e1≤0.05.

An average crystallite size of the shell portion may be in a range of 180 nm to 250 nm, preferably 190 nm to 230 nm, and more preferably 200nm to 220 nm. In a case in which the average crystallite size of the shell portion of the positive electrode active material for a lithium secondary battery satisfies the above range, an effect of optimizing a reaction surface area of the positive electrode active material and an electrolyte solution may be obtained while increasing capacity of the lithium secondary battery.

The shell portion may have a composition represented by [Formula 2] below.

[Formula 2] Liₓ₂Niₐ₂Co_{b2}Mn_{c2}Al_{d2}M²ₑ₂O₂

In Formula 2, M² may be at least one selected from the group consisting of Zr, B, W, Mg, Ce, Hf, Ta, La, Ti, Sr, Ba, F, P, and S, and it is particularly preferable that M² includes Zr in terms of improving structural stability of lithium transition metal oxide.

x2 represents a molar ratio of lithium in the lithium transition metal oxide, wherein x2 may satisfy 0.90≤x2≤1.2, preferably 0.95≤x2≤1.08, and more preferably 1≤x2≤1.08.

a2 represents a molar ratio of nickel among metallic elements other than lithium in the lithium transition metal oxide, wherein a2 may satisfy 0.83≤a2<1.0 or 0.85≤a2≤0.99. In a case in which the amount of the nickel satisfies the above range, high capacity characteristics may be achieved.

b2 represents a molar ratio of cobalt among the metallic elements other than lithium in the lithium transition metal oxide, wherein b2 may satisfy 0<b2<0.20, 0<b2≤0.15, or 0.01≤b2≤0.10. The amount of the cobalt may vary depending on amounts of nickel, manganese, aluminum, and M². In a case in which the amount of the cobalt is excessively large, there is a problem in that cost of the raw material increases overall and reversible capacity is decreased, and, in a case in which the amount of the cobalt is excessively small, there is a problem in that it is difficult to simultaneously achieve sufficient rate capability and high powder density of the battery.

c2 represents a molar ratio of manganese among the metallic elements other than lithium in the lithium transition metal oxide, wherein c2 may satisfy 0<c2<0.20, 0<c2≤0.15, or 0.01≤c2≤0.10. In a case in which the amount of the manganese is excessively large, problems may occur in achieving high capacity, and, in a case in which the amount of the manganese is excessively small, there is a problem in that production costs increase.

d2 represents a molar ratio of aluminum among the metallic elements other than lithium in the lithium transition metal oxide, wherein d2 may satisfy 0<d2<0.20,0<d2≤0.15, or 0.01≤d2≤0.10. In a case in which the amount of the aluminum is excessively large, there is a problem in that resistance is increased, and, in a case in which the amount of the aluminum is excessively small, there is a problem in that the production costs increase.

e2 represents a molar ratio of M² among the metallic elements other than lithium in the lithium transition metal oxide, wherein e2 may satisfy 0≤e2≤0.10 or 0≤e2≤0.05.

In an embodiment of the present invention, a1 described in Formula 1 of the core portion may be smaller than a2 described in Formula 2 of the shell portion.

In the positive electrode active material according to the present invention, the average crystallite size of the core portion may be smaller than the average crystallite size of the shell portion. Occurrence of defects, such as micro cracks, in the core portion and formation of a film due to decomposition of the electrolyte solution may be suppressed by making the average crystallite size of the core portion smaller than the average crystallite size of the shell portion in the high-nickel lithium transition metal oxide. In addition, the shell portion has an advantage of capacity characteristics by maintaining a larger average crystallite size than the core portion and may reduce reactivity with the electrolyte solution due to a small specific surface area. Accordingly, the positive electrode active material of the present invention may improve life characteristics while maintaining initial capacity characteristics and output characteristics when used in a battery.

Specifically, in the positive electrode active material for a lithium secondary battery according to the present invention, a difference between the average crystallite size of the core portion and the average crystallite size of the shell portion may be in a range of 20 nm to 150 nm, preferably 30 nm to 100 nm, and more preferably 40 nm to 80 nm. In a case in which the difference between the average crystallite size of the core portion and the average crystallite size of the shell portion of the positive electrode active material for a lithium secondary battery satisfies the above range, the positive electrode active material of the present invention may improve the life characteristics while maintaining the initial capacity characteristics and output characteristics when used in the battery.

Also, the positive electrode active material may further include a coating layer formed on a surface thereof, wherein the coating layer may include at least one metal selected from the group consisting of B, aluminum (Al), Hf, niobium (Nb), Ta, molybdenum (Mo), silicon (Si), zinc (Zn), and Zr.

Since the coating layer suppresses occurrence of a side reaction by blocking a contact between the positive electrode active material and the electrolyte solution included in the lithium secondary battery, the coating layer may improve the life characteristics and may also increase packing density of the positive electrode active material.

The coating layer may be formed on the entire surface of the positive electrode active material, or may be formed partially. Specifically, in a case in which the coating layer is partially formed on the surface of the positive electrode active material, the coating layer may be formed on an area of 20% or more of a total area of the positive electrode active material. In a case in which the area of the coating layer is less than 20%, an effect of improving the life characteristics and improving the packing density according to the formation of the coating layer may be insignificant.

Furthermore, the coating layer may be formed in a thickness ratio of 1/10,000 to 1/100 with respect to an average particle diameter of the positive electrode active material particle. If the thickness ratio of the coating layer to the positive electrode active material particle is less than 1/10,000, the effect of improving the life characteristics and improving the packing density according to the formation of the coating layer is insignificant, and, when the thickness ratio is greater than 1/100, there is a concern that battery characteristics are degraded.

### Method of Preparing Positive Electrode Active Material

A method of preparing a positive electrode active material according to the present invention may include the steps of: preparing a first transition metal-containing solution containing nickel, cobalt, manganese, and aluminum; forming core portion particles by a co-precipitation reaction while adding the first transition metal-containing solution, a basic aqueous solution, and an ammonium cationic complexing agent to a reactor; forming particles of a positive electrode active material precursor by forming a shell portion on the core portion particles by a co-precipitation reaction while adding a second transition metal-containing solution, a basic aqueous solution, and an ammonium cationic complexing agent to a reaction solution including the core portion particles; and mixing the positive electrode active material precursor with a lithium-containing raw material and sintering the mixture.

All of the descriptions of the above-described positive electrode active material may be applied to the method of preparing a positive electrode active material.

The method of preparing a positive electrode active material according to the present invention will be described in detail for each step.

First, a first transition metal-containing solution and a second transition metal-containing solution, which contain nickel, cobalt, manganese, and aluminum, are prepared.

The first transition metal-containing solution and the second transition metal-containing solution, for example, may include a nickel (Ni)-containing raw material, a cobalt (Co)-containing raw material, a manganese (Mn)-containing raw material, and an aluminum (Al)-containing raw material.

The nickel (Ni)-containing raw material, for example, may be nickel-containing acetic acid salts, nitrates, sulfates, halides, sulfides, hydroxides, oxides, or oxyhydroxides, and may specifically be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, a nickel halide, or a combination thereof, but the present invention is not limited thereto.

The cobalt (Co)-containing raw material may be cobalt-containing acetic acid salts, nitrates, sulfates, halides, sulfides, hydroxides, oxides, or oxyhydroxides, and may specifically be Co(OH)₂, CoOOH, Co(OCOCH₃)₂·4H₂O, Co(NO₃)₂·6H₂O, CoSO₄, Co(SO₄)₂·7H₂O, or a combination thereof, but the present invention is not limited thereto.

The manganese (Mn)-containing raw material, for example, may be manganese-containing acetic acid salts, nitrates, sulfates, halides, sulfides, hydroxides, oxides, oxyhydroxides, or a combination thereof, and may specifically be a manganese oxide such as Mn₂O₃, MnO₂, and Mn₃O₄; a manganese salt such as MnCO₃, Mn(NO₃)₂, MnSO₄, manganese acetate, manganese dicarboxylate, manganese citrate, and a fatty acid manganese salt; a manganese oxyhydroxide, manganese chloride, or a combination thereof, but the present invention is not limited thereto.

The aluminum (Al)-containing raw material, for example, may be aluminum-containing acetic acid salts, nitrates, sulfates, halides, sulfides, hydroxides, oxides, oxyhydroxides, or a combination thereof, and may specifically be Al(OH)₃, Al₂O₃, Al(OCOCH₃)₃, Al(NO₃)₃, Al₂(SO₄)₃, or a combination thereof, but the present invention is not limited thereto.

The first transition metal-containing solution and the second transition metal-containing solution may be prepared by adding the nickel (Ni)-containing raw material, the cobalt (Co)-containing raw material, the manganese (Mn)-containing raw material, and the aluminum (Al)-containing raw material to a solvent, specifically water, or a mixture of water and an organic solvent (e.g., alcohol etc.) which may be uniformly mixed with the water, or may be prepared by mixing an aqueous solution of the nickel (Ni)-containing raw material, an aqueous solution of the cobalt (Co)-containing raw material, an aqueous solution of the manganese (Mn)-containing raw material, and an aqueous solution of the aluminum (Al)-containing raw material.

According to the present invention, the first transition metal-containing solution and the second transition metal-containing solution may contain nickel in an amount of 80 atm% or more based on a total number of moles of the transition metals.

As a method of controlling the crystallite sizes of the core portion and the shell portion of the positive electrode active material, for example, a method of controlling the crystallite sizes of the core portion and the shell portion by varying a transition metal composition may be included. Specifically, a method of varying the amounts of the nickel of the first transition metal-containing solution and the second transition metal-containing solution, varying whether or not a doping element is added to each of the core portion and the shell portion, or varying addition amounts of the doping element included in the core portion and the shell portion may be used.

In an embodiment of the present invention, the transition metal-containing solution may be prepared in the form of a first transition metal-containing solution containing nickel, cobalt, manganese, and aluminum and a second transition metal-containing solution which contains nickel, cobalt, manganese, and aluminum and has a higher mole fraction of nickel relative to the total transition metals than the first transition metal-containing solution.

In another embodiment of the present invention, the transition metal-containing solution may be prepared in the form of a first transition metal-containing solution and a second transition metal-containing solution in which types or amounts of doping elements are different.

Specifically, as the doping element, for example, Zr, B, W, Mg, Ce, Hf, Ta, La, Ti, Sr, Ba, F, P, and S may be used, and it is particularly preferable that the doping element includes Zr in terms of improving structural stability of the lithium transition metal oxide.

In a case in which Zr is used as the doping element, if an amount of Zr contained in the first transition metal-containing solution is greater than that of the second transition metal-containing solution, the average crystallite size of the core portion may be adjusted to be smaller than the average crystallite size of the shell portion.

Next, the transition metal-containing solution is added to a reactor, and a co-precipitation reaction is performed while adding an ammonium cationic complexing agent and a basic aqueous solution to prepare a transition metal hydroxide in the form of a secondary particle in which primary particles are aggregated.

The ammonium cationic complexing agent may be NH₄OH, (NH₄)₂SO₄, NH₄NO₃, NH₄Cl, CH₃COONH₄, or (NH₄)₂CO₃, and a mixture of at least one thereof may be used. Also, the ammonium cationic complexing agent may be used in the form of an aqueous solution, and, in this case, water or a mixture of water and an organic solvent (specifically, alcohol etc.),which may be uniformly mixed with the water, may be used as a solvent.

The basic aqueous solution may include at least one selected from the group consisting of NaOH, KOH, and Ca(OH)₂, and water or a mixture of water and an organic solvent (specifically, alcohol etc.)which may be uniformly mixed with the water, may be used as a solvent. In this case, a concentration of the basic aqueous solution may be in a range of 2 M to 5 M, for example, 3 M to 4 M. In a case in which the concentration of the basic aqueous solution satisfies the above range, uniform-sized precursor particles may be formed, formation time of the precursor particles is fast, and yield may also be excellent. The basic aqueous solution is added to adjust a pH of the reaction solution, wherein an amount of the basic aqueous solution may be adjusted to maintain the pH at 9 to 12during the co-precipitation reaction, and may be adjusted to preferably maintain the pH at 10.5 to 11.5.

According to the present invention, a temperature during the co-precipitation reaction may be in a range of 30°C to 60°C, for example, 30°C to 50°C. Since the transition metal hydroxide is prepared in the above-described temperature range, control of the co-precipitation reaction is easy and productivity may be improved. In a case in which the co-precipitation reaction is performed outside the above-described temperature range, at less than 30°C, the productivity may be reduced due to loss of transition metal ions, and, in a case in which the co-precipitation reaction is performed at a temperature of greater than 60°C,it is not easy to control a size of the primary particles due to excessive growth of the crystallites, and the control of the co-precipitation reaction may not be easy due to occurrence of rapid evaporation of ammonia.

The pH during the co-precipitation reaction may be in a range of 9 to 12, for example, 10.5 to 11.5.Transition metal hydroxide particles having an appropriate particle size distribution and density may be prepared by performing a co-precipitation reaction at a pH within the above range. In contrast, in a case in which the mixture is co-precipitated at a pH of less than 9, there is a problem in that the productivity is reduced due to the loss of the transition metal ions, or, in a case in which the mixture is co-precipitated at a pH of greater than 12, there is a problem in that the secondary particle does not grow.

In an embodiment of the present invention, the first transition metal-containing solution is added to the reactor, and a co-precipitation reaction is performed while adding a basic aqueous solution and an ammonium cationic complexing agent to be able to grow a core portion in the form of a secondary particle in which primary particles are aggregated. When an average particle diameter D50 of the positive electrode active material precursor particles in the reaction solution reaches 85% or more, for example, 90% or more of a total particle diameter of the particles, the second transition metal-containing solution is added to the reactor, and a co-precipitation reaction may be performed while adding a basic aqueous solution and an ammonium cationic complexing agent. The positive electrode active material precursor may be prepared by growing the shell portion on the outside of the core portion using the method as described above.

With respect to the positive electrode active material according to the present invention, it may be prepared by mixing the above-described positive electrode active material precursor with a lithium-containing raw material and sintering the mixture.

In this case, the lithium-containing raw material is not particularly limited as long as it is a compound including a lithium source, but, preferably, at least one selected from the group consisting of lithium carbonate (Li₂CO₃), lithium hydroxide (LiOH), LiNO₃, CH₃COOLi, and Li₂(COO)₂ may be used.

Preferably, the positive electrode active material according to the present invention may be prepared by mixing the positive electrode active material precursor and the lithium-containing raw material in a molar ratio of 1.0 to 1.1, for example, 1.03 to 1.1 and sintering at 600°C to 850°C for 3 hours to 30 hours.

In a case in which the lithium-containing raw material is mixed in a ratio less than the above range, capacity of the prepared positive electrode active material may be reduced, and, in a case in which the lithium-containing raw material is mixed in a ratio greater than the above range, since particles are sintered during a sintering process, the preparation of the positive electrode active material may be difficult, the capacity may be reduced, and separation of positive electrode active material particles may occur after the sintering.

Also, in a case in which the sintering temperature is less than 600°C, since the raw materials may remain in the particles due to an insufficient reaction, high-temperature stability of the battery may be reduced and structural stability may be reduced due to decreases in volume density and crystallinity. In a case in which the sintering temperature is greater than 850°C, non-uniform growth of the particles may occur, and, since a size of the particles is excessively increased to reduce an amount of the particles per unit area, volume capacity of the battery may be reduced. In consideration of the particle size control, capacity, and stability of the prepared positive electrode active material particles and a reduction in lithium-containing by-products, the sintering temperature may be more preferably in a range of 700°C to 750°C.

Furthermore, in a case in which the sintering time is less than 3 hours, since the reaction time is too short, it may be difficult to obtain a high crystalline positive electrode active material, and, in a case in which the sintering time is greater than 30 hours, the size of the particles may be excessively increased and production efficiency may be reduced.

In an embodiment of the present invention, since an amount of a doping element in the shell portion is increased in comparison to that of the core portion by adding the doping element in the sintering step, the average crystallite size of the core portion may be adjusted to be smaller than the average crystallite size of the shell portion.

Specifically, as the doping element, for example, Zr, B, W, Mg, Ce, Hf, Ta, La, Ti, Sr, Ba, F, P, and S may be used, and it is particularly preferable that the doping element includes Zr in terms of improving the structural stability of the lithium transition metal oxide.

The doping elements may each independently be included in an amount of 0.1 mol% to 2 mol%, for example, 0.2 mol% to 1 mol% based on total moles of the metallic elements excluding lithium which are included in the entire core portion and shell portion. For example, in a case in which the doping elements are each independently included in the core portion and the shell portion in an amount of less than 0.1 mol%, an effect of improving structural stability and output characteristics according to the addition of the doping element may be insignificant, and, in a case in which the amount of the doping element is greater than 2 mol%, the capacity may be reduced and a lithium by-product may be increased.

### Positive Electrode

A positive electrode according to the present invention includes the above-described positive electrode active material of the present invention. Specifically, the positive electrode includes a positive electrode collector and a positive electrode active material layer formed on the positive electrode collector, wherein the positive electrode active material layer includes a positive electrode active material according to the present invention. Since the positive electrode active material has been described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF),polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca),or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Electrochemical Device

Next, an electrochemical device according to the present invention will be described. The electrochemical device according to the present invention includes the above-described positive electrode of the present invention, wherein the electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500um, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic materia l and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be added in an amount of 10 wt% or less, for example, 5wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN (C₂F₅SO₂)₂, LiN (CF₃SO₂)₂, LiCl, LiI, or LiB (C₂O₄) ₂may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery is not particularly limited, but a cylindrical type using a can, a prismatic type, a pouch type, or a coin type may be used.

The lithium secondary battery may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

### Example 1

NiSO₄, CoSO₄, MnSO₄, and Al₂(SO₄)₃ were mixed in distilled water in amounts such that a molar ratio of nickel:cobalt:manganese:aluminum was 83:5:10:2 to prepare a first transition metal aqueous solution with a concentration of 2 M.

Also, NiSO₄, CoSO₄, MnSO₄, and Al₂(SO₄)₃were mixed in distilled water in amounts such that a molar ratio of nickel:cobalt:manganese:aluminum was 90:4:4:2 to prepare a second transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the first transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form cores of precursor particles.

Then, when an average particle diameter D50 of the precursor particles in a reaction solution reached 14 µm, the second transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and an additional co-precipitation reaction was performed for 1 hour to grow shells of the precursor particles.

When the average particle diameter of the precursor particles reached 15 um, the reaction was terminated, and the precursor particles were separated from the reaction solution through filtering and dried to obtain a positive electrode active material precursor.

LiOH and the obtained positive electrode active material precursor were mixed so that a molar ratio of Li: (Ni+Co+Mn+Al) was 1.05:1, and sintering was performed at 730°C for 15 hours to prepare a lithium transition metal oxide having an average particle diameter D50 of 15 µm.

### Example 2

NiSO₄, CoSO₄, MnSO₄, and Al₂(SO₄)₃were mixed in distilled water in amounts such that a molar ratio of nickel:cobalt:manganese:aluminum was 85:6.5:6.5:2 to prepare a first transition metal aqueous solution with a concentration of 2 M.

Also, NiSO₄, CoSO₄, MnSO₄, and Al₂(SO₄)₃were mixed in distilled water in amounts such that a molar ratio of nickel:cobalt:manganese:aluminum was 90:4:4:2 to prepare a second transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the first transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form cores of precursor particles.

Then, when an average particle diameter D50 of the precursor particles in a reaction solution reached 14 µm, the second transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and an additional co-precipitation reaction was performed for 1 hour to grow shells of the precursor particles.

When the average particle diameter of the precursor particles reached 15 um, the reaction was terminated, and the precursor particles were separated from the reaction solution through filtering and dried to obtain a positive electrode active material precursor.

LiOH and the obtained positive electrode active material precursor were mixed so that a molar ratio of Li: (Ni+Co+Mn+Al) was 1.05:1, and sintering was performed at 730°C for 15 hours to prepare a lithium transition metal oxide having an average particle diameter D50 of 15 µm.

### Example 3

NiSO₄, CoSO₄, MnSO₄, Al₂(SO₄)₃, and Zr(SO₄)₂were mixed in distilled water in amounts such that a molar ratio of nickel:cobalt:manganese:aluminum:zirconium was 85:6.5:6.5:1.5:0.5 to prepare a first transition metal aqueous solution with a concentration of 2 M.

Also, NiSO₄, CoSO₄, MnSO₄, and Al₂(SO₄)₃ were mixed in distilled water in amounts such that a molar ratio of nickel:cobalt:manganese:aluminum was 90:4:4:2 to prepare a second transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the first transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form cores of precursor particles.

Then, when an average particle diameter D50 of the precursor particles in a reaction solution reached 14 µm, the second transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and an additional co-precipitation reaction was performed for 1 hour to grow shells of the precursor particles.

When the average particle diameter of the precursor particles reached 15 um, the reaction was terminated, and the precursor particles were separated from the reaction solution through filtering and dried to obtain a positive electrode active material precursor.

LiOH and the obtained positive electrode active material precursor were mixed so that a molar ratio of Li: (Ni+Co+Mn+Al+Zr) was 1.05:1, and sintering was performed at 730°C for 15 hours to prepare a lithium transition metal oxide having an average particle diameter D50 of 15 µm.

### Example 4

NiSO₄, CoSO₄, MnSO₄, and Al₂(SO₄)₃ were mixed in distilled water in amounts such that a molar ratio of nickel:cobalt:manganese:aluminum was 85:6.5:6.5:2 to prepare a first transition metal aqueous solution with a concentration of 2 M.

Also, NiSO₄, CoSO₄, MnSO₄, and Al₂(SO₄)₃ were mixed in distilled water in amounts such that a molar ratio of nickel:cobalt:manganese:aluminum was 90:4:4:2 to prepare a second transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the first transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form cores of precursor particles.

Then, when an average particle diameter D50 of the precursor particles in a reaction solution reached 14 µm, the second transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and an additional co-precipitation reaction was performed for 1 hour to grow shells of the precursor particles.

When the average particle diameter of the precursor particles reached 15 um, the reaction was terminated, and the precursor particles were separated from the reaction solution through filtering and dried to obtain a positive electrode active material precursor.

LiOH, the obtained positive electrode active material precursor, and ZrO₂ were mixed so that a molar ratio of Li: (Ni+Co+Mn+Al) :Zr was 1.05:1:0.005, and sintering was performed at 730°C for 15 hours to prepare a lithium transition metal oxide having an average particle diameter D50 of 15 µm.

### Example 5

NiSO₄, CoSO₄, MnSO₄, and Al₂(SO₄)₃ were mixed in distilled water in amounts such that a molar ratio of nickel:cobalt:manganese:aluminum was 85:6.5:6.5:2 to prepare a first transition metal aqueous solution with a concentration of 2 M.

Also, NiSO₄, CoSO₄, MnSO₄, and Al₂(SO₄)₃ were mixed in distilled water in amounts such that a molar ratio of nickel:cobalt:manganese:aluminum was 90:4:4:2 to prepare a second transition metal aqueous solution with a concentration of 1.5 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the first transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form cores of precursor particles.

Then, when an average particle diameter D50 of the precursor particles in a reaction solution reached 14 µm, the second transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and an additional co-precipitation reaction was performed for 1 hour to grow shells of the precursor particles.

When the average particle diameter of the precursor particles reached 15 um, the reaction was terminated, and the precursor particles were separated from the reaction solution through filtering and dried to obtain a positive electrode active material precursor.

LiOH, the obtained positive electrode active material precursor, and ZrO₂ were mixed so that a molar ratio of Li: (Ni+Co+Mn+Al) :Zr was 1.05:1:0.005, and sintering was performed at 730°C for 15 hours to prepare a lithium transition metal oxide having an average particle diameter D50 of 15 µm.

### Example 6

NiSO₄, CoSO₄, MnSO₄, and Al₂(SO₄)₃ were mixed in distilled water in amounts such that a molar ratio of nickel:cobalt:manganese:aluminum was 85:6.5:6.5:2 to prepare a first transition metal aqueous solution with a concentration of 2.5 M.

Also, NiSO₄, CoSO₄, MnSO₄, and Al₂(SO₄)₃ were mixed in distilled water in amounts such that a molar ratio of nickel:cobalt:manganese:aluminum was 90:4:4:2 to prepare a second transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the first transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form cores of precursor particles.

Then, when an average particle diameter D50 of the precursor particles in a reaction solution reached 14 µm, the second transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and an additional co-precipitation reaction was performed for 1 hour to grow shells of the precursor particles.

When the average particle diameter of the precursor particles reached 15 um, the reaction was terminated, and the precursor particles were separated from the reaction solution through filtering and dried to obtain a positive electrode active material precursor.

LiOH, the obtained positive electrode active material precursor, and ZrO₂ were mixed so that a molar ratio of Li: (Ni+Co+Mn+Al) :Zr was 1.05:1:0.005, and sintering was performed at 730°C for 15 hours to prepare a lithium transition metal oxide having an average particle diameter D50 of 15 µm.

### Comparative Example 1

NiSO₄, CoSO₄, MnSO₄, and Al₂(SO₄)₃ were mixed in distilled water in amounts such that a molar ratio of nickel:cobalt:manganese:aluminum was 90:4:4:2 to prepare a transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form precursor particles.

When an average particle diameter of the precursor particles reached 15 um, the reaction was terminated, and the precursor particles were separated from the reaction solution through filtering and dried to obtain a positive electrode active material precursor.

LiOH and the obtained positive electrode active material precursor were mixed so that a molar ratio of Li: (Ni+Co+Mn+Al) was 1.05:1, and sintering was performed at 730°C for 15 hours to prepare a lithium transition metal oxide having an average particle diameter D50 of 15 µm.

### Comparative Example 2

NiSO₄, CoSO₄, MnSO₄, and Al₂(SO₄)₃ were mixed in distilled water in amounts such that a molar ratio of nickel:cobalt:manganese:aluminum was 85:6.5:6.5:2 to prepare a transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form precursor particles.

When an average particle diameter of the precursor particles reached 15 um, the reaction was terminated, and the precursor particles were separated from the reaction solution through filtering and dried to obtain a positive electrode active material precursor.

LiOH and the obtained positive electrode active material precursor were mixed so that a molar ratio of Li: (Ni+Co+Mn+Al) was 1.05:1, and sintering was performed at 730°C for 15 hours to prepare a lithium transition metal oxide having an average particle diameter D50 of 15 um.

### Comparative Example 3

NiSO₄, CoSO₄, MnSO₄, and Al₂(SO₄)₃ were mixed in distilled water in amounts such that a molar ratio of nickel:cobalt:manganese:aluminum was 83:5:10:2 to prepare a transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form precursor particles.

When an average particle diameter of the precursor particles reached 15 um, the reaction was terminated, and the precursor particles were separated from the reaction solution through filtering and dried to obtain a positive electrode active material precursor.

LiOH and the obtained positive electrode active material precursor were mixed so that a molar ratio of Li: (Ni+Co+Mn+Al) was 1.05:1, and sintering was performed at 730°C for 15 hours to prepare a lithium transition metal oxide having an average particle diameter D50 of 15 um.

### Comparative Example 4

NiSO₄, CoSO₄, MnSO₄, and Al₂(SO₄)₃ were mixed in distilled water in amounts such that a molar ratio of nickel:cobalt:manganese:aluminum was 90:4:4:2 to prepare a first transition metal aqueous solution with a concentration of 2 M.

Also, NiSO₄, CoSO₄, MnSO₄, and Al₂(SO₄)₃ were mixed in distilled water in amounts such that a molar ratio of nickel:cobalt:manganese:aluminum was 85:6.5:6.5:2 to prepare a second transition metal aqueous solution with a concentration of 2 M.

Subsequently, after deionized water was put into a reactor set at 45°C, dissolved oxygen in the water was removed by purging the reactor with nitrogen gas to create a non-oxidizing atmosphere in the reactor. Thereafter, 4 M NaOH was added so that a pH in the reactor was maintained at 11.

Thereafter, the first transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and a co-precipitation reaction was performed for 15 hours to form cores of precursor particles.

Then, when an average particle diameter D50 of the precursor particles in a reaction solution reached 14 um, the second transition metal aqueous solution, a sodium hydroxide aqueous solution, and an ammonium aqueous solution were added to the reactor at rates of 4 mL/min, 4 mL/min, and 1 mL/min, respectively, to set a reaction temperature at 45°C and a pH at 11, and an additional co-precipitation reaction was performed for 1 hour to grow shells of the precursor particles.

When the average particle diameter of the precursor particles reached 15 um, the reaction was terminated, and the precursor particles were separated from the reaction solution through filtering and dried to obtain a positive electrode active material precursor.

LiOH and the obtained positive electrode active material precursor were mixed so that a molar ratio of Li: (Ni+Co+Mn+Al) was 1.05:1, and sintering was performed at 730°C for 15 hours to prepare a lithium transition metal oxide having an average particle diameter D50 of 15 um.

### Experimental Example 1

Average crystallite sizes of the core portions and the shell portions of the lithium transition metal oxide particles prepared in Examples 1 to 6 and Comparative Examples 1 to 4 were measured in the following manner using a TITAN G2HR-TEM.Measurement results are presented in Table 1.

**[Table 1]**

| | Average crystallite size of the core (nm) | Average crystallite size of the shell (nm) |
|---|---|---|
| Example 1 | 120 | 200 |
| Example 2 | 160 | 200 |
| Example 3 | 120 | 200 |
| Example 4 | 120 | 180 |
| Example 5 | 120 | 260 |
| Example 6 | 80 | 200 |
| Comparative Example 1 | 200 | 200 |
| Comparative Example 2 | 160 | 160 |
| Comparative Example 3 | 120 | 120 |
| Comparative Example 4 | 200 | 160 |

### Experimental Example 2 -Initial Discharge Capacity Evaluation

Each of the lithium transition metal oxides prepared in the examples and the comparative examples as a positive electrode active material, carbon black as a conductive agent, and polyvinylidene fluoride, as a binder, were mixed in an N-methylpyrrolidone solvent so that a weight ratio of the positive electrode active material:the conductive agent:the binder was 96:2:2 to prepare a positive electrode slurry. One surface of an aluminum current collector was coated with the positive electrode slurry, dried at 130°C, and then roll-pressed to prepare a positive electrode.

Next, a negative electrode active material (natural graphite), a conductive agent (carbon black), and a binder (polyvinylidene fluoride, PVDF) were mixed in an N-methylpyrrolidone solvent in a weight ratio of 95:2:3 to prepare a negative electrode slurry. A copper current collector was coated with the negative electrode slurry, dried, and then roll-pressed to prepare a negative electrode.

After an electrode assembly was prepared by disposing a porous polyethylene separator between the above-prepared positive electrode and negative electrode, the electrode assembly was put in a battery case, and an electrolyte solution was then injected into the case to prepare each lithium secondary battery. In this case, as the electrolyte solution, an electrolyte solution, in which 2 wt% of vinyl carbonate (VC) was added and 1 M LiPF₆ was dissolved in an organic solvent in which ethylene carbonate(EC) :dimethyl carbonate(DMC) :ethyl methyl carbonate(EMC) were mixed in a ratio of 3:4:3, was injected to prepare the lithium secondary battery.

Each of the lithium secondary batteries prepared as described above was charged at a constant current of 0.1 C to 4.25 V at 25°C, and then discharged at a constant current of 0.1 C to 2.5 V to measure initial discharge capacity.

**[Table 2]**

| | Discharge capacity (mAh/g) |
|---|---|
| Example 1 | 206 |
| Example 2 | 208 |
| Example 3 | 206 |
| Example 4 | 206 |
| Example 5 | 205 |
| Example 6 | 203 |
| Comparative Example 1 | 209 |
| Comparative Example 2 | 207 |
| Comparative Example 3 | 203 |
| Comparative Example 4 | 208 |

As illustrated in Table 2, it may be confirmed that the secondary batteries including the lithium transition metal oxide particles prepared in Examples 1 to 6 and Comparative Examples 1 to 4 had similar initial discharge capacities.

### Experimental Example 3- Life Characteristics Evaluation

Charging of each of the lithium secondary batteries prepared in Experimental Example 2 at a constant current of 0.3 C to 4.25 V at 45°C and discharging of each lithium secondary battery at a constant current of 0.3 C to 2.5 V were set as one cycle, and, after 100 cycles of charging and discharging were performed, a capacity retention after 100 cycles was measured.

**[Table 3]**

| | Capacity retention after 100 cycles (%) |
|---|---|
| Example 1 | 96 |
| Example 2 | 95 |
| Example 3 | 96 |
| Example 4 | 96 |
| Example 5 | 95 |
| Example 6 | 96 |
| Comparative Example 1 | 75 |
| Comparative Example 2 | 90 |
| Comparative Example 3 | 93 |
| Comparative Example 4 | 91 |

As illustrated 6in Table 3, since it was measured that the secondary batteries including the lithium transition metal oxide particles prepared in Examples 1 to 6 had higher capacity retentions after 100 cycles than the secondary batteries including the lithium transition metal oxide particles prepared in Comparative Examples 1 to 4, it may be confirmed that cycle characteristics of the secondary batteries including the lithium transition metal oxide particles prepared in Examples 1 to 6 were excellent.

## Claims

1. A positive electrode active material for a lithium secondary battery, the positive electrode active material comprising lithium transition metal oxide particles having a core-shell structure which includes a core portion and a shell portion disposed on a surface of the core portion,
wherein an average crystallite size of the core portion is smaller than an average crystallite size of the shell portion, and
an amount of nickel among total transition metals included in the core portion and the shell portion is 80 atm% or more.

2. The positive electrode active material for a lithium secondary battery of claim 1, wherein a difference between the average crystallite size of the core portion and the average crystallite size of the shell portion is in a range of 20 nm to 150 nm.

3. The positive electrode active material for a lithium secondary battery of claim 1, wherein a difference between the average crystallite size of the core portion and the average crystallite size of the shell portion is in a range of 30 nm to 100 nm.

4. The positive electrode active material for a lithium secondary battery of claim 1, wherein the average crystallite size of the core portion is in a range of 100 nm to 180 nm.

5. The positive electrode active material for a lithium secondary battery of claim 1, wherein the average crystallite size of the shell portion is in a range of 180 nm to 250 nm.

6. The positive electrode active material for a lithium secondary battery of claim 1, wherein, in the lithium transition metal oxide, a mole fraction of the nickel among the total transition metals of the core portion is smaller than a mole fraction of the nickel among the total transition metals of the shell portion.

7. The positive electrode active material for a lithium secondary battery of claim 6, wherein the core portion has a composition represented by [Formula 1].
[Formula 1] Liₓ₁Niₐ₁Co_{b1}Mn_{c1}Al_{d1}M¹ₑ₁O₂
wherein, in Formula 1, M¹ is at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
0.90≤x1≤1.1,0.80≤a1≤0.95,0<b1<0.20,0<c1<0.20,0<d1≤0.10, and 0≤e1<0.10.

8. The positive electrode active material for a lithium secondary battery of claim 6, wherein the shell portion has a composition represented by [Formula 2].
[Formula 2] Liₓ₂Niₐ₂CO_{b2}Mn_{c2}Al_{d2}M²ₑ₂O₂
wherein, in Formula 2, M² is at least one selected from the group consisting of Zr, B, W, Mg, Ce, Hf, Ta, La, Ti, Sr, Ba, F, P, and S, and
0.90≤x2≤1.1,0.83≤a2<1.0,0<b2<0.17,0<c2<0.17,0<d2≤0.10, and 0≤e2<0.10.

9. A positive electrode comprising the positive electrode active material of any one of claims 1 to 8.

10. A lithium secondary battery comprising the positive electrode of claim 9, a negative electrode, a separator disposed between the positive electrode and the negative electrode, and an electrolyte.
